# EUROPÄISCHE PATENTANMELDUNG

(11) **EP 4 591 700 A1**
(43) Veröffentlichungstag der Anmeldung: **30.07.2025**
(21) Anmeldenummer: 24153749.7
(22) Anmeldetag: 24.01.2024
(51) Int. Cl.: A01D 45/02

(54) **SYSTEM ZUR ERNTE VON MAIS, VORSATZBAUGRUPPE, SAMMELBAUGRUPPE SOWIE VERFAHREN ZUM BETREIBEN EINER SAMMELBAUGRUPPE**

(71) Anmelder: Schächtele, Sebastian, 79206 Breisach-Gündlingen (DE)
(72) Erfinder: Schächtele, Sebastian, 79206 Breisach-Gündlingen (DE)
(74) Vertreter: Maiwald GmbH

(57) **Zusammenfassung**

Es wird ein System (10) zur Ernte von Mais beschrieben. Das System (10) umfasst eine Vorsatzbaugruppe (14) zur Montage an einem Trägerfahrzeug (12). Die Vorsatzbaugruppe (14) weist wenigstens zwei Trenneinheiten (20) zum Abtrennen von Maiskolben von übrigen Bestandteilen einer Maispflanze auf. Das System (10) umfasst ferner eine Sammelbaugruppe (18) zum Aufnehmen abgetrennter Maiskolben und eine Förderbaugruppe (16) zum Transferieren abgetrennter Maiskolben von der Vorsatzbaugruppe (14) zur Sammelbaugruppe (18). Die wenigstens zwei Trenneinheiten (20) weisen einen Mittenabstand (22) von 25 cm bis 50 cm auf. Ferner werden eine zugehörige Vorsatzbaugruppe (14) und eine Sammelbaugruppe (18) zum Aufnehmen abgetrennter Maiskolben vorgestellt. Die Sammelbaugruppe (18) umfasst eine erste Einheit und eine zweite Einheit, wobei die erste Einheit einen Boden der Sammelbaugruppe (22) umfasst und gegenüber der zweiten Einheit um eine Drehachse drehbar ist. Die Drehachse verläuft quer zu einer Ernterichtung (50). Ferner wird ein Verfahren zum Betreiben einer derartigen Sammelbaugruppe (18) beschrieben.

## Beschreibung

Die vorliegende Erfindung bezieht sich auf ein System zur Ernte von Mais. Das System umfasst eine Vorsatzbaugruppe, eine Sammelbaugruppe und eine Förderbaugruppe. Die Vorsatzbaugruppe ist zur Montage an einem Trägerfahrzeug geeignet und umfasst wenigstens zwei Trenneinheiten zum Abtrennen von Maiskolben von übrigen Bestandteilen einer Maispflanze. Die Sammelbaugruppe ist zum Aufnehmen abgetrennter Maiskolben geeignet. Die Förderbaugruppe ist zum Transferieren abgetrennter Maiskolben von der Vorsatzbaugruppe zur Sammelbaugruppe geeignet.

Die vorliegende Erfindung bezieht sich ebenfalls auf eine Vorsatzbaugruppe für ein derartiges System zur Ernte von Mais, die wenigstens zwei Trenneinheiten zum Abtrennen von Maiskolben von übrigen Bestandteilen einer Maispflanze umfasst.

Weiterhin bezieht sich die vorliegende Erfindung auf eine Sammelbaugruppe für ein derartiges System zur Ernte von Mais.

Schließlich betrifft die vorliegende Erfindung ein Verfahren zum Betreiben einer solchen Sammelbaugruppe zum Aufnehmen abgetrennter Maiskolben.

Bei der Erzeugung und Vermehrung von Maissaatgut wird häufig sogenannter Vatermais mit sogenanntem Muttermais gekreuzt. Typischerweise werden dabei auf einem größeren Anteil einer Vermehrungsfläche, d.h. eines Feldes, Muttermaispflanzen angebaut, die im reifen Zustand das gewünschte Maissaatgut liefern sollen. Auf einem kleineren Anteil der Vermehrungsfläche, d.h. des Feldes, werden in mehreren schmalen Streifen zwischen den Muttermaispflanzen Vatermaispflanzen angebaut. Die Vatermaispflanzen liefert Pollen zur Bestäubung der Muttermaispflanzen.

Um eine sortenreine Ernte von Muttermais ohne Kontamination mit Körnern von Vatermais zu erreichen, müssen die Vatermaispflanzen vor der Ernte des Muttermaises von der Vermehrungsfläche entfernt werden. Zu diesem Zweck wird der Vatermais häufig auf der Vermehrungsfläche gemulcht. Die Kolben des Vatermaises bleiben somit ungenutzt. Nur der Muttermais wird zur weiteren Verwendung als Saatgut geerntet.

Ziel der vorliegenden Erfindung ist es deshalb, eine Ernte und damit Nutzung der Kolben des Vatermaises, der bei der Saatguterzeugung und -vermehrung anfällt, zu ermöglichen.

Ein erster Aspekt der Erfindung betrifft ein System zur Ernte von Mais. Das System umfasst eine Vorsatzbaugruppe zur Montage an einem Trägerfahrzeug. Die Vorsatzbaugruppe weist wenigstens zwei Trenneinheiten zum Abtrennen von Maiskolben von übrigen Bestandteilen einer Maispflanze auf. Das System umfasst ferner eine Sammelbaugruppe zum Aufnehmen abgetrennter Maiskolben und eine Förderbaugruppe zum Transferieren abgetrennter Maiskolben von der Vorsatzbaugruppe zur Sammelbaugruppe. Die wenigstens zwei Trenneinheiten weisen einen Mittenabstand von 25 cm bis 50 cm auf. Die Vorsatzbaugruppe kann über vordefinierte Schnittstellen an einem Trägerfahrzeug, beispielsweise einem Traktor, befestigt werden. Die Vorsatzbaugruppe kann an einer Front oder an einem Heck des Trägerfahrzeugs befestigt werden. Die Front des Trägerfahrzeuges ist dabei als vorderer Teil bei Vorwärtsfahrt des Trägerfahrzeugs definiert. Das Heck des Trägerfahrzeugs ist als hinterer Teil bei Vorwärtsfahrt des Trägerfahrzeugs definiert. Die wenigstens zwei Trenneinheiten, die Förderbaugruppe und die Sammelbaugruppe ermöglichen es, Maiskolben, genauer gesagt Maiskolben von Vatermaispflanzen zu ernten und nachfolgend zu nutzen, z. B. als Viehfutter oder für die Erzeugung von Biogas. Der Mittenabstand der wenigstens zwei Trenneinheiten von 25 cm bis 50 cm lässt sich dabei auf einen Reihenabstand zwischen Pflanzreihen mit Vatermaispflanzen abstimmen. Dabei ist ein Reihenabstand zwischen Pflanzreihen mit Vatermais üblicherweise geringer als ein Reihenabstand zwischen Pflanzreihen mit Muttermais. Es können also Maispflanzen, die in einem Reihenabstand von 25 cm bis 50 cm angesät sind, geerntet werden. Das erfindungsgemäße System ist somit dafür geeignet, auf Vermehrungsflächen, d.h. Feldern, verwendet zu werden, auf denen die Pflanzreihen der Vatermaispflanzen mit einem vergleichsweise geringen Reihenabstand und insbesondere mit einem kleineren Reihenabstand als die Muttermaispflanzen angesät werden. Der Mittenabstand der wenigstens zwei Trenneinheiten von 25 cm bis 50 cm lässt sich dabei auf einen Reihenabstand zwischen Pflanzreihen mit Vatermaispflanzen abstimmen. Beispielsweise kann ein Reihenabstand zwischen Pflanzreihen mit Vatermais halb so groß sein wie ein Reihenabstand zwischen Pflanzreihen mit Muttermais. Der kleinere Abstand zwischen den Pflanzreihen mit Vatermaispflanzen wird dabei gewählt, um auf vergleichsweise kleiner Fläche, d.h. unter Nutzung von möglichst wenig Fläche, genug Pollen zur Bestäubung der Muttermaispflanzen zu erzeugen. Insgesamt wird es mit dem erfindungsgemäßen System möglich, Vatermais, der bei der Vermehrung von Maissaatgut anfällt, zu ernten und zu nutzen.

Das erfindungsgemäße System zur Ernte von Mais ist zudem kompakt. Insbesondere ist die Vorsatzbaugruppe kompakt. Das liegt einerseits daran, dass die wenigstens zwei Trenneinheiten einen Mittenabstand von 25 cm bis 50 cm aufweisen, also einen vergleichsweise kleinen Mittenabstand haben. Andererseits liegt dies daran, dass die Vorsatzbaugruppe vergleichsweise wenige, jedoch wenigstens zwei Trenneinheiten aufweist. Die Kompaktheit bewirkt ferner, dass sich das System zur Ernte von Mais in einem Zustand, in dem es am Trägerfahrzeug montiert ist, leicht und präzise manövrieren lässt. Insbesondere lässt sich ein Trägerfahrzeug mit einem derartigen System auf engen Feldwegen wenden, ohne dass dabei eine Beschädigung eines Nachbarbestands oder der Muttermaispflanzen riskiert wird.

Nachdem das erfindungsgemäße System zur Ernte von Mais besonders gut für die Ernte von Vatermais geeignet ist, kann es auch als System zur Ernte von Vatermais bezeichnet werden.

In einem Beispiel beträgt der Mittenabstand zwischen den Trenneinheiten 27,5 cm bis 47,5 cm. Wieder kann der Mittenabstand der wenigstens zwei Trenneinheiten auf einen Reihenabstand zwischen Pflanzreihen mit Vatermaispflanzen abgestimmt werden. Mit einem Mittenabstand von 27,5 cm bis 47,5 cm lassen sich gängige Reihenabstände von Vatermaispflanzen abdecken, sodass diese zuverlässig geerntet werden können. In einem Beispiel beträgt der Mittenabstand 37,5 cm. Ein derartiges System zur Ernte von Mais kann beispielsweise in einer Situation verwendet werden, in der der Reihenabstand zwischen Pflanzreihen mit Muttermais 75 cm und der Reihenabstand zwischen Pflanzreihen mit Vatermais 37,5 cm beträgt. In einem anderen Beispiel beträgt der Mittenabstand 40 cm. Ein derartiges System zur Ernte von Mais kann beispielsweise in einer Situation verwendet werden, in der der Reihenabstand zwischen Pflanzreihen mit Muttermais 80 cm und der Reihenabstand zwischen Pflanzreihen mit Vatermais 40 cm beträgt.

Es wird angemerkt, dass bekannte Systeme zur Ernte von Mais auf einen Reihenabstand von 75 cm ausgelegt sind. Solche Systeme sind also dazu ausgebildet, Muttermaispflanzen zu ernten, die, wie bereits erläutert, auf einem Großteil der Vermehrungsfläche angebaut werden und dazu gedacht sind, das gewünschte Saatgut zu liefern. Dabei sind solche Systeme ferner dazu ausgebildet, sich über eine Vielzahl von Pflanzreihen gleichzeitig zu erstrecken, um Muttermaispflanzen möglichst effizient ernten zu können. Derartige Systeme sind also zu groß, um Vatermais, der auf schmalen Streifen zwischen dem Muttermais angebaut wird, ohne Beeinträchtigung des Muttermaises zu ernten.

In einem Beispiel umfasst die Vorsatzbaugruppe zwei, drei oder vier Trenneinheiten. Benachbarte Trenneinheiten weisen jeweils einen Mittenabstand von 25 cm bis 50 cm auf. In einem Beispiel beträgt der Mittenabstand 27,5 cm bis 47,5 cm, insbesondere 37,5 cm oder 40 cm. Die Vorsatzbaugruppe ist also dazu ausgebildet, Maispflanzen, die in zwei, drei oder vier Pflanzreihen wachsen, gleichzeitig zu ernten. Dabei wird berücksichtigt, dass die schmalen Streifen zwischen den Muttermaispflanzen, auf denen Vatermaispflanzen angebaut werden, typischerweise zwei, drei oder vier Pflanzreihen mit Vatermaispflanzen umfassen. Auf diese Tatsache ist die vorliegende Vorsatzbaugruppe angepasst. Insbesondere im Vergleich zu bekannten Vorsatzbaugruppen ist sie also besonders schmal. Wäre die Vorsatzbaugruppe breiter, so würden die Muttermaispflanzen unerwünscht beeinträchtigt werden.

Die Vorsatzbaugruppe kann eine Schnittstelle zur Montage der Vorsatzbaugruppe am Trägerfahrzeug aufweisen. Dabei sind die wenigstens zwei Trenneinheiten drehbar oder verschiebbar an der Schnittstelle gelagert. Falls die wenigstens zwei Trenneinheiten drehbar an der Schnittstelle gelagert sind, sind die wenigstens zwei Trenneinheiten bevorzugt um eine gemeinsame Drehachse drehbar. Dabei verläuft die Drehachse vorzugsweise quer zu einer Ernterichtung und im Betriebszustand der Vorsatzbaugruppe im Wesentlichen horizontal. Ferner sind die wenigstens zwei Trenneinheiten jeweils an ihren dem Trägerfahrzug zugewandten Enden drehbar an der Schnittstelle gelagert. Die wenigstens zwei Trenneinheiten können somit durch Drehen um die Drehachse zwischen einer Verwendungsstellung, in der sie im Wesentlichen in die Ernterichtung weisen, und einer Rückzugsstellung, in der die wenigstens zwei Trenneinheiten gegenüber der Verwendungsstellung verdreht sind, verstellt werden. Dabei sind die wenigstens zwei Trenneinheiten in der Rückzugsstellung vorzugsweise um wenigstens 45°, weiter bevorzugt um wenigstens 70° oder wenigstens 80°, gegenüber der Verwendungsstellung verdreht. Das bedeutet, dass die wenigstens zwei Trenneinheiten mit einer Vertikalen einen Winkel von 45° oder weniger, vorzugsweise von 70° oder weniger oder 20°oder weniger, einschließen. In der Rückzugsstellung sind die wenigstens zwei Trenneinheiten also gegenüber der Verwendungsstellung in Richtung einer Vertikalen aufgerichtet. Dadurch benötigen die wenigstens zwei Trenneinheiten in der Rückzugsstellung vergleichsweise wenig Platz. Das gilt insbesondere für eine Stellfläche, die die Vorsatzbaugruppe benötigt, wenn die wenigstens zwei Trenneinheiten die Rückzugsstellung einnehmen. In einem Zustand, in dem die Vorsatzbaugruppe am Trägerfahrzeug montiert ist, kann folglich durch Überführen der wenigstens zwei Trenneinheiten in die Rückzugsstellung eine Gesamtlänge des Trägerfahrzeugs deutlich reduziert werden. Auf diese Weise wird eine Wendigkeit des mit dem System zur Ernte von Mais ausgestatteten Trägerfahrzeugs deutlich erhöht. Insbesondere wird es so möglich, mit dem Trägerfahrzeug, an dem das System zur Ernte von Mais montiert ist, auf engem Raum, z. B. auf einem Feldweg, zu wenden. Dieselben Effekte und Vorteile ergeben sich, wenn die wenigstens zwei Trenneinheiten verschiebbar an der Schnittstelle gelagert sind. In diesem Fall sind die wenigstens zwei Trenneinheiten bevorzugt in Vertikalrichtung gegenüber der Schnittstelle verschiebbar, wobei die Vorsatzbaugruppe in ihrer üblichen Betriebsstellung vorliegt. In dieser Variante lassen sich die wenigstens zwei Trenneinheiten also nach Art einer Gabelstaplergabel anheben. Dabei entspricht die angehobene Stellung der Rückzugsstellung. Die wenigstens zwei Trenneinheiten lassen sich dabei insbesondere so weit anheben, dass sie bei einem Wendemanöver des mit dem System zur Ernte von Mais ausgestatteten Trägerfahrzeugs oberhalb von eventuellen Hindernissen, z. B. Maispflanzen, liegen. Auch auf diese Weise wird eine Wendigkeit des mit dem System zur Ernte von Mais ausgestatteten Trägerfahrzeugs deutlich erhöht. Insbesondere wird es so möglich, mit dem Trägerfahrzeug, an dem das System zur Ernte von Mais montiert ist, auf engem Raum, z. B. auf einem Feldweg, zu wenden. Die in der Rückzugsstellung befindlichen wenigstens zwei Trenneinheiten werden dabei oberhalb von Maispflanzen oder andere Hindernissen bewegt.

In einer Ausführungsform weist das System zur Ernte von Mais eine Breite von höchstens 200 cm, vorzugsweise von höchstens 190 cm, auf. Mit anderen Worten weist der Verbund aus Vorsatzbaugruppe, Sammelbaugruppe und Förderbaugruppe eine Breite von höchstens 200 cm, vorzugsweise von höchstens 190 cm, auf. Es versteht sich, dass ein Trägerfahrzeug dabei ebenfalls eine Breite von höchstens 200 cm, vorzugsweise von höchstens 190 cm, aufweist und die Kombination aus Trägerfahrzeug und System zur Ernte von Mais ebenfalls eine Breite von höchstens 200 cm, vorzugsweise von höchstens 190 cm, hat. Dabei wird die Breite quer zur Ernterichtung und im Wesentlichen in horizontaler Richtung gemessen. Das System ist folglich vergleichsweise schmal. Daher kann unter Nutzung des Systems besonders zuverlässig Vatermais geerntet werden, der häufig in mehreren schmalen Streifen zwischen Muttermaispflanzen angebaut wird, ohne dabei die Muttermaispflanzen zu beeinträchtigen. In einem Beispiel weist die breiteste Baugruppe aus Vorsatzbaugruppe, Sammelbaugruppe und Förderbaugruppe im Wesentlichen dieselbe Breite wie das Trägerfahrzeug auf. Beispielsweise ist die Sammelbaugruppe die breiteste Baugruppe. Diese kann eine Breite von 185 cm haben. Vorzugsweise hat dann das Trägerfahrzeug auch eine Breite von 185 cm. In einem anderen Beispiel ist auch die Sammelbaugruppe die breiteste Baugruppe und hat eine Breite von 160 cm. In diesem Fall kann das Trägerfahrzeug ebenfalls eine Breite von 160cm haben.

In einem Beispiel umfasst die Förderbaugruppe ein Förderband. Das Förderband dient zum schonenden Transport von abgetrennten Maiskolben in die Sammelbaugruppe. Alternativ kann das Förderband zum Transport von Häckselgut ausgebildet sein, das gehäckselte Maiskolben umfasst. Dies ist insbesondere dann nützlich, wenn die Vorsatzbaugruppe eine Häckseleinrichtung zum Häckseln von Maiskolben umfasst. In einem solchen Fall kann die Förderbaugruppe ein Auswurfrohr zum Transfer des Häckselguts in die Sammelbaugruppe umfassen.

In einem Beispiel umfasst die Sammelbaugruppe eine erste Einheit und eine zweite Einheit. Die erste Einheit umfasst einen Boden und ist gegenüber der zweiten Einheit um eine Drehachse drehbar, die quer zu einer Ernterichtung verläuft. Die Ernterichtung ist als eine Betriebsrichtung des Systems zur Ernte von Mais zu verstehen. Die Ernterichtung entspricht also derjenigen Richtung, entlang derer das System zur Maisernte auf der Vermehrungsfläche, d.h. dem Feld, bewegt wird. Die Sammelbaugruppe kann durch Drehung der ersten Einheit relativ zur zweiten Einheit von einer Aufnahmestellung, in der die Sammelbaugruppe zum Aufnehmen von Maiskolben eingerichtet ist, in eine Entleerstellung überführt werden, in der Maiskolben aus der Sammelbaugruppe entfernt werden. Ebenso lässt sich die Sammelbaugruppe durch Drehung der ersten Einheit relativ zur zweiten Einheit von der Entleerstellung in die Aufnahmestellung überführen. Die genannte Orientierung der Drehachse quer zur Ernterichtung ermöglicht dabei, dass die Sammelbaugruppe entleert werden kann, ohne ein seitliches Kippmoment zu erzeugen, das über die Sammelbaugruppe auch auf das Trägerfahrzeug wirken kann. Als seitliches Kippmoment ist dabei ein Drehmoment um eine Achse zu verstehen, die parallel zur Betriebsrichtung des Systems zur Ernte von Mais verläuft. Dies kann zu einer verminderten Standfestigkeit des Trägerfahrzeugs und infolgedessen zu einem Umkippen des Trägerfahrzeuges führen. Eine Vermeidung eines derartigen Kippmoments trägt zu einer Kippsicherheit des Trägerfahrzeuges bei. Dies ist insbesondere relevant, da das Trägerfahrzeug eine vergleichsweise kleine Spurweite aufweisen muss, um die schmalen Streifen Vatermais zwischen dem Muttermais abernten zu können, ohne den Muttermais unerwünscht zu beeinträchtigen. Mit anderen Worten bewirkt die genannte Orientierung der Drehachse, dass beim Überführen der Sammelbaugruppe von der Aufnahmestellung in die Entleerstellung eine Gewichtsverlagerung im Wesentlichen entlang der Betriebsrichtung stattfindet. Das Risiko einer verminderten Standfestigkeit des Trägerfahrzeugs und/oder eines Umkippens des Trägerfahrzeugs ist somit besonders gering.

In einem Beispiel ist die Drehachse mit Bezug auf die Ernterichtung an einer Rückseite der Sammelbaugruppe angeordnet. Die Rückseite der Sammelbaugruppe ist gleichbedeutend mit derjenigen Seite, die dem Trägerfahrzeug abgewandt ist. Für eine Drehung der ersten Einheit relativ zur zweiten Einheit kann somit ein Raum an der Rückseite der Sammelbaugruppe genutzt werden, d.h. ein Raum, der auf einer dem Trägerfahrzeug entgegengesetzten Seite der Sammelbaugruppe liegt. Das Trägerfahrzeug und die relativ zueinander drehenden Einheiten der Sammelbaugruppe konkurrieren also nicht um denselben Raum. Auf diese Weise kann insbesondere eine Kollision einer der Einheiten der Sammelbaugruppe mit dem Trägerfahrzeug ausgeschlossen werden. Ferner ist es bei einer derartigen Konfiguration in vorteilhafter Weise möglich, Maiskolben aus der Sammelbaugruppe in ein Transport- oder Lagerbehältnis umzufüllen. Dafür kann das Transport- oder Lagerbehältnis auf einer Rückseite der Sammelbaugruppe angeordnet werden und konkurriert somit auch nicht mit dem Trägerfahrzeug um Raum.

In einem Beispiel umfasst die erste Einheit drei Wandelemente. Jedes der Wandelemente ist an einer Seite des Bodens vorgesehen. Dabei hat der Boden vorzugsweise eine rechteckige Form. Der Boden umfasst also vier Seiten, die jeweils einer Kante der rechteckigen Form entsprechen. Somit lassen sich Maiskolben mit hoher Präzision aus der Sammelbaugruppe entleeren, da auf dem Boden gelagerte Maiskolben auf drei Seiten durch die Wandelemente am Verlassen der ersten Einheit gehindert sind. Folglich bildet diejenige Seite des Bodens, an der kein Wandelement vorgesehen ist, eine bevorzugte Richtung, entlang derer Maiskolben die erste Einheit und somit die Sammelbaugruppe als Ganzes verlassen können. Beispielsweise ist in diesem Zusammenhang an derjenigen Seite, die in Richtung des Trägerfahrzeugs weist, kein Wandelement der ersten Einheit vorgesehen. Darüber hinaus dienen die drei Wandelemente der mechanischen Stabilisierung der ersten Einheit, die folglich vergleichsweise hohe Lasten aufnehmen kann.

In einem Beispiel umfasst die zweite Einheit vier Wandelemente. Die vier Wandelemente umschließen umfangsmäßig einen quaderförmigen Raum. Somit können in diesem quaderförmigen Raum Maiskolben sicher aufgenommen werden. Die vier Wandelemente können zueinander paarweise rechtwinklig angeordnet sein. Dies ist bei einer rechteckigen Grundfläche des Sammelraums der Fall. Die Wandelemente können als massive Wandelemente, beispielsweise aus Blech, ausgebildet sein. Die Wandelemente können auch zumindest teilweise als Gitter ausgebildet sein. Dies führt zu einer Gewichtseinsparung im Vergleich zu massiven Wandelementen. Weiterhin kann ein Füllstand des Sammelbehälters leicht durch Gitterelemente abgelesen werden, da diese teilweise durchblickt werden können.

In einem Beispiel grenzt in einer Aufnahmestellung der Sammelbaugruppe jeweils eines der Wandelemente der zweiten Einheit direkt an eines der Wandelemente der ersten Einheit an. Die Aufnahmestellung beschreibt dabei eine Stellung, in der Maiskolben aufgenommen und in der Sammelbaugruppe gesammelt werden können. Zusammen mit dem Boden und den Wandelementen der ersten Einheit können die vier Wandelemente der zweiten Einheit einen prismatischen Sammelraum mit viereckiger Grundfläche zum Sammeln von Maiskolben bilden. Dieser Sammelraum ist in einer Aufnahmestellung der Sammelbaugruppe auf einer Unterseite durch den Boden begrenzt. Optional ist der Sammelraum nach oben offen. Folglich können die Maiskolben zuverlässig in der Sammelbaugruppe gesammelt werden.

Im Gegensatz zur Aufnahmestellung beschreibt die Entleerstellung eine Stellung, in der Maiskolben aus der Sammeleinheit entfernt werden können. In der Entleerstellung grenzt lediglich ein Wandelement der zweiten Einheit an ein Wandelement der ersten Einheit an. Der Bereich, in dem das Wandelement der zweiten Einheit an das Wandelement der ersten Einheit in der Entleerstellung angrenzt, wird durch die Drehachse zwischen erster und zweiter Einheit gebildet.

In einem Beispiel umfasst die Sammelbaugruppe eine Montageschnittstelle zur Befestigung am Trägerfahrzeug, d.h. an demjenigen Fahrzeug, an dem auch die Vorsatzbaugruppe montiert ist. Alternativ dient die Montageschnittstelle zur Befestigung an einem Begleitfahrzeug, d.h. an einem vom Trägerfahrzeug, an dem die Vorsatzbaugruppe montiert ist, separaten Fahrzeug. Die Montageschnittstelle kann zur Befestigung an einem Heck des Trägerfahrzeugs oder Begleitfahrzeugs und/oder zur Befestigung der Sammelbaugruppe an einer Front des Trägerfahrzeuges oder Begleitfahrzeugs ausgebildet sein. Für den Fall, dass die Sammelbaugruppe am Trägerfahrzeug montiert wird, wird die Vorsatzbaugruppe an der jeweils entgegengesetzten Seite des Trägerfahrzeuges, also an der Front oder am Heck, montiert. Die Montageschnittstelle ist insbesondere an der zweiten Einheit der Sammelbaugruppe vorgesehen. Die Sammelbaugruppe ist somit direkt ohne weitere Zwischenelemente am Heck oder an der Front des Trägerfahrzeugs oder Begleitfahrzeugs montierbar. Die Sammelbaugruppe lässt sich somit vergleichsweise schnell und einfach am Trägerfahrzeug oder Begleitfahrzeug montieren.

Die Sammelbaugruppe ist insbesondere auch mittelbar am Heck oder an der Front des Trägerfahrzeuges oder Begleitfahrzeuges montierbar. Für den Fall der mittelbaren Montage kommt insbesondere ein Hubmast als Zwischenelement zwischen Sammelbaugruppe und Heck des Trägerfahrzeuges oder Sammelfahrzeuges in Betracht. Dieser dient dazu, die Sammelbaugruppe im Wesentlichen entlang einer Vertikalrichtung wahlweise anheben zu können. Dies ist insbesondere in Kombination mit der Entleerstellung der Sammelbaugruppe vorteilhaft, da auf diese Weise die Sammelbaugruppe oberhalb eines Transport- oder Lagerbehältnisses positioniert werden kann, in das die Maiskolben transferiert werden sollen. Das Transport- oder Lagerbehältnis kann insbesondere als Anhänger zur Abfuhr der Maiskolben von der Vermehrungsfläche, d.h. vom Feld, ausgebildet sein. Derartige Anhänger weisen beispielsweise eine Ladekante in einer Höhe von circa 3 Meter über dem Erdboden auf. Insbesondere in Verbindung mit einem Hubmast ist die aus der oben beschriebenen Orientierung der Drehachse resultierende Stabilität und Abwesenheit von Kippmomenten vorteilhaft. Die Montage über einen Hubmast ist ferner vorteilhaft, um bei einem Wendemanöver des mit der Sammelbaugruppe ausgestatteten Trägerfahrzeugs oder Begleitfahrzeugs die Sammelbaugruppe in einen Bereich oberhalb von eventuellen Hindernissen, z. B. Maispflanzen, zu bewegen. Auf diese Weise wird eine Wendigkeit des mit der Sammelbaugruppe ausgestatteten Trägerfahrzeugs oder Begleitfahrzeugs deutlich erhöht. Insbesondere wird es so möglich, mit dem Trägerfahrzeug oder Sammelfahrzeug, an dem die Sammelbaugruppe montiert ist, auf engem Raum, z. B. auf einem Feldweg, zu wenden. Die mittels des Hubmast nach oben bewegte Sammelbaugruppe wird dabei oberhalb von Maispflanzen oder andere Hindernissen bewegt.

In einer Variante, in der einerseits die Sammelbaugruppe über einen Hubmast am Trägerfahrzeug befestigt ist und andererseits die Vorsatzbaugruppe eine Schnittstelle aufweist, wobei die wenigstens zwei Trenneinheiten drehbar oder verschiebbar an der Schnittstelle gelagert sind, lassen sich zum Ausführen eines Wendemanövers des mit dem System zur Ernte von Mais ausgestatteten Trägerfahrzeugs sowohl die Sammelbaugruppe mittels des Hubmasts in eine angehobene Stellung überführen als auch die wenigstens zwei Trenneinheiten in die Rückzugsstellung bringen. In einer solchen Konfiguration ist das mit dem System zur Ernte von Mais ausgestattete Trägerfahrzeug äußerst kompakt, insbesondere vergleichsweise kurz. Nachdem das Wendemanöver beendet ist, können die wenigstens zwei Trenneinheiten wieder in ihre Verwendungsstellung überführt werden und die Sammelbaugruppe in eine tiefere Stellung gefahren werden.

Bevorzugt ist in diesem Zusammenhang das mit dem System zur Ernte von Mais ausgestattete Trägerfahrzeug in einer Situation, in der die wenigstens zwei Trenneinheiten in der Rückzugsstellung sind und die Sammelbaugruppe hochgefahren ist, nicht länger als 5 Meter.

In einer Alternative umfasst die Sammelbaugruppe eine Montageschnittstelle zur Befestigung auf einer Ladefläche des Trägerfahrzeuges. Eine Ladefläche des Trägerfahrzeuges ist eine im Wesentlichen horizontale Fläche, die sich oberhalb von Achsen von Straßenrädern des Trägerfahrzeugs befindet. In dieser Alternative kann die Vorsatzbaugruppe entweder an der Front oder am Heck des Trägerfahrzeugs montiert werden. Die Front des Trägerfahrzeuges ist wieder als vorderer Teil bei Vorwärtsfahrt des Trägerfahrzeugs definiert. Das Heck des Trägerfahrzeugs ist wie bisher als hinterer Teil bei Vorwärtsfahrt des Trägerfahrzeugs definiert.

Ein zweiter Aspekt der Erfindung betrifft eine Vorsatzbaugruppe für ein erfindungsgemäßes System zur Ernte von Mais. Die Vorsatzbaugruppe ist zur Montage an einem Trägerfahrzeug vorgesehen. Sie umfasst wenigstens zwei Trenneinheiten zum Abtrennen von Maiskolben von übrigen Bestandteilen einer Maispflanze. Die wenigstens zwei Trenneinheiten weisen einen Mittenabstand von 25 cm bis 50 cm zueinander auf. Die Vorsatzbaugruppe kann an einer Front oder an einem Heck des Trägerfahrzeugs befestigt werden. Die Front des Trägerfahrzeuges ist als vorderer Teil bei Vorwärtsfahrt des Trägerfahrzeugs definiert. Das Heck des Trägerfahrzeugs ist als hinterer Teil bei Vorwärtsfahrt des Trägerfahrzeugs definiert. Die wenigstens zwei Trenneinheiten ermöglichen es, Maiskolben, genauer gesagt Maiskolben von Vatermaispflanzen zu ernten und nachfolgend zu nutzen, z. B. als Viehfutter oder für die Erzeugung von Biogas. Der Mittenabstand der wenigstens zwei Trenneinheiten von 25 cm bis 50 cm lässt sich dabei auf einen Reihenabstand zwischen Pflanzreihen mit Vatermaispflanzen abstimmen. Dabei ist ein Reihenabstand zwischen Pflanzreihen mit Vatermais üblicherweise geringer als ein Reihenabstand zwischen Pflanzreihen mit Muttermais. Es können also Maispflanzen, die in einem Reihenabstand von 25 cm bis 50 cm angesät sind, geerntet werden. Die erfindungsgemäße Vorsatzbaugruppe ist somit dafür geeignet, auf Vermehrungsflächen, d.h. Feldern, verwendet zu werden, auf denen die Pflanzreihen der Vatermaispflanzen mit einem vergleichsweise geringen Reihenabstand und insbesondere mit einem kleineren Reihenabstand als die Muttermaispflanzen angesät werden. Der Mittenabstand der wenigstens zwei Trenneinheiten von 25 cm bis 50 cm lässt sich dabei auf einen Reihenabstand zwischen Pflanzreihen mit Vatermaispflanzen abstimmen. Beispielsweise kann ein Reihenabstand zwischen Pflanzreihen mit Vatermais halb so groß sein wie ein Reihenabstand zwischen Pflanzreihen mit Muttermais. Der kleinere Abstand zwischen den Pflanzreihen mit Vatermaispflanzen wird dabei gewählt, um auf vergleichsweise kleiner Fläche, d.h. unter Nutzung von möglichst wenig Fläche, genug Pollen zur Bestäubung der Muttermaispflanzen zu erzeugen. Insgesamt wird es mit der erfindungsgemäßen Vorsatzbaugruppe möglich, Vatermais, der bei der Vermehrung von Maissaatgut anfällt, zu ernten und zu nutzen.

Die erfindungsgemäße Vorsatzbaugruppe ist zudem kompakt. Das liegt einerseits daran, dass die wenigstens zwei Trenneinheiten einen Mittenabstand von 25 cm bis 50 cm aufweisen, also einen vergleichsweise kleinen Mittenabstand haben. Andererseits liegt dies daran, dass die Vorsatzbaugruppe vergleichsweise wenige, jedoch wenigstens zwei Trenneinheiten aufweist. Die Kompaktheit bewirkt ferner, dass sich das System zur Ernte von Mais in einem Zustand, in dem es am Trägerfahrzeug montiert ist, leicht und präzise manövrieren lässt. Insbesondere lässt sich ein Trägerfahrzeug mit einem derartigen System auf engen Feldwegen wenden, ohne dass dabei eine Beschädigung eines Nachbarbestands oder der Muttermaispflanzen riskiert wird.

In einem Beispiel beträgt der Mittenabstand zwischen den Trenneinheiten 27,5 cm bis 47,5 cm. Wieder kann der Mittenabstand der wenigstens zwei Trenneinheiten auf einen Reihenabstand zwischen Pflanzreihen mit Vatermaispflanzen abgestimmt werden. Mit einem Mittenabstand von 27,5 cm bis 47,5 cm lassen sich gängige Reihenabstände von Vatermaispflanzen abdecken, sodass diese zuverlässig geerntet werden können. In einem Beispiel beträgt der Mittenabstand 37,5 cm. Ein derartiges System zur Ernte von Mais kann beispielsweise in einer Situation verwendet werden, in der der Reihenabstand zwischen Pflanzreihen mit Muttermais 75 cm und der Reihenabstand zwischen Pflanzreihen mit Vatermais 37,5 cm beträgt. In einem anderen Beispiel beträgt der Mittenabstand 40 cm. Ein derartiges System zur Ernte von Mais kann beispielsweise in einer Situation verwendet werden, in der der Reihenabstand zwischen Pflanzreihen mit Muttermais 80 cm und der Reihenabstand zwischen Pflanzreihen mit Vatermais 40 cm beträgt.

Es wird angemerkt, dass bekannte Vorsatzbaugruppen auf einen Reihenabstand von 75 cm ausgelegt sind. Solche Vorsatzbaugruppen sind also dazu ausgebildet, Muttermaispflanzen zu ernten, die, wie bereits erläutert, auf einem Großteil der Vermehrungsfläche angebaut werden und dazu gedacht sind, das gewünschte Saatgut zu liefern. Dabei sind solche Vorsatzbaugruppen ferner dazu ausgebildet, sich über eine Vielzahl von Pflanzreihen gleichzeitig zu erstrecken, um Muttermaispflanzen möglichst effizient ernten zu können. Derartige Vorsatzbaugruppen sind also zu groß, um Vatermais, der auf schmalen Streifen zwischen dem Muttermais angebaut wird, ohne Beeinträchtigung des Muttermaises zu ernten.

In einem Beispiel umfasst die Vorsatzbaugruppe zwei, drei oder vier Trenneinheiten. Benachbarte Trenneinheiten weisen jeweils einen Mittenabstand von 25 cm bis 50 cm auf. In einem Beispiel beträgt der Mittenabstand 27,5 cm bis 47,5 cm, insbesondere 37,5 cm oder 40 cm. Die Vorsatzbaugruppe ist also dazu ausgebildet, Maispflanzen, die in zwei, drei oder vier Pflanzreihen wachsen, gleichzeitig zu ernten. Dabei wird berücksichtigt, dass die schmalen Streifen zwischen den Muttermaispflanzen, auf denen Vatermaispflanzen angebaut werden, typischerweise zwei, drei oder vier Pflanzreihen mit Vatermaispflanzen umfassen. Auf diese Tatsache ist die vorliegende Vorsatzbaugruppe angepasst. Insbesondere im Vergleich zu bekannten Vorsatzbaugruppen ist sie also besonders schmal. Wäre die Vorsatzbaugruppe breiter, so würden die Muttermaispflanzen unerwünscht beeinträchtigt werden.

Die Vorsatzbaugruppe kann eine Schnittstelle zur Montage der Vorsatzbaugruppe am Trägerfahrzeug aufweisen. Dabei sind die wenigstens zwei Trenneinheiten drehbar oder verschiebbar an der Schnittstelle gelagert. Falls die wenigstens zwei Trenneinheiten drehbar an der Schnittstelle gelagert sind, sind die wenigstens zwei Trenneinheiten bevorzugt um eine gemeinsame Drehachse drehbar. Dabei verläuft die Drehachse vorzugsweise quer zu einer Ernterichtung und im Betriebszustand der Vorsatzbaugruppe im Wesentlichen horizontal. Ferner sind die wenigstens zwei Trenneinheiten jeweils an ihren dem Trägerfahrzug zugewandten Enden drehbar an der Schnittstelle gelagert. Die wenigstens zwei Trenneinheiten können somit durch Drehen um die Drehachse zwischen einer Verwendungsstellung, in der sie im Wesentlichen in die Ernterichtung weisen, und einer Rückzugsstellung, in der die wenigstens zwei Trenneinheiten gegenüber der Verwendungsstellung verdreht sind, verstellt werden. Dabei sind die wenigstens zwei Trenneinheiten in der Rückzugsstellung vorzugsweise um wenigstens 45°, weiter bevorzugt um wenigstens 70° oder wenigstens 80°, gegenüber der Verwendungsstellung verdreht. Das bedeutet, dass die wenigstens zwei Trenneinheiten mit einer Vertikalen einen Winkel von 45° oder weniger, vorzugsweise von 70° oder weniger oder 20°oder weniger, einschließen. In der Rückzugsstellung sind die wenigstens zwei Trenneinheiten also gegenüber der Verwendungsstellung in Richtung einer Vertikalen aufgerichtet. Dadurch benötigen die wenigstens zwei Trenneinheiten in der Rückzugsstellung vergleichsweise wenig Platz. Das gilt insbesondere für eine Stellfläche, die die Vorsatzbaugruppe benötigt, wenn die wenigstens zwei Trenneinheiten die Rückzugsstellung einnehmen. In einem Zustand, in dem die Vorsatzbaugruppe am Trägerfahrzeug montiert ist, kann folglich durch Überführen der wenigstens zwei Trenneinheiten in die Rückzugsstellung eine Gesamtlänge des Trägerfahrzeugs deutlich reduziert werden. Auf diese Weise wird eine Wendigkeit des mit der Vorsatzbaugruppe ausgestatteten Trägerfahrzeugs deutlich erhöht. Insbesondere wird es so möglich, mit dem Trägerfahrzeug, an dem die Vorsatzbaugruppe montiert ist, auf engem Raum, z. B. auf einem Feldweg, zu wenden. Dieselben Effekte und Vorteile ergeben sich, wenn die wenigstens zwei Trenneinheiten verschiebbar an der Schnittstelle gelagert sind. In diesem Fall sind die wenigstens zwei Trenneinheiten bevorzugt in Vertikalrichtung gegenüber der Schnittstelle verschiebbar, wobei die Vorsatzbaugruppe in ihrer üblichen Betriebsstellung vorliegt. In dieser Variante lassen sich die wenigstens zwei Trenneinheiten also nach Art einer Gabelstaplergabel anheben. Dabei entspricht die angehobene Stellung der Rückzugsstellung. Die wenigstens zwei Trenneinheiten lassen sich dabei insbesondere so weit anheben, dass sie bei einem Wendemanöver des mit der Vorsatzbaugruppe ausgestatteten Trägerfahrzeugs oberhalb von eventuellen Hindernissen, z. B. Maispflanzen, liegen. Auch auf diese Weise wird eine Wendigkeit des mit der Vorsatzbaugruppe ausgestatteten Trägerfahrzeugs deutlich erhöht. Insbesondere wird es so möglich, mit dem Trägerfahrzeug, an dem die Vorsatzbaugruppe montiert ist, auf engem Raum, z. B. auf einem Feldweg, zu wenden. Die in der Rückzugsstellung befindlichen wenigstens zwei Trenneinheiten werden dabei oberhalb von Maispflanzen oder andere Hindernissen bewegt.

In einer Ausführungsform weist die Vorsatzbaugruppe eine Breite von höchstens 200 cm, vorzugsweise von höchstens 190 cm, auf. Dabei wird die Breite quer zur Ernterichtung und im Wesentlichen in horizontaler Richtung gemessen. Die Vorsatzbaugruppe ist folglich vergleichsweise schmal. Daher kann unter Nutzung der Vorsatzbaugruppe besonders zuverlässig Vatermais geerntet werden, der häufig in mehreren schmalen Streifen zwischen Muttermaispflanzen angebaut wird, ohne dabei die Muttermaispflanzen zu beeinträchtigen.

Ein dritter Aspekt der Erfindung betrifft eine Sammelbaugruppe für ein erfindungsgemäßes System zur Ernte von Mais und zum Aufnehmen abgetrennter Maiskolben. Die Sammelbaugruppe umfasst eine erste Einheit und eine zweite Einheit. Die erste Einheit umfasst einen Boden der Sammelbaugruppe und ist gegenüber der zweiten Einheit um eine Drehachse drehbar. Die Drehachse verläuft quer zu einer Ernterichtung. Die Ernterichtung ist als eine Betriebsrichtung des Systems zur Ernte von Mais definiert. Die Ernterichtung entspricht also derjenigen Richtung, entlang derer die Sammelbaugruppe zur Maisernte auf der Vermehrungsfläche, d.h. dem Feld, bewegt wird. Die Sammelbaugruppe kann durch Drehung der ersten Einheit relativ zur zweiten Einheit von einer Aufnahmestellung, in der die Sammelbaugruppe zum Aufnehmen von Maiskolben eingerichtet ist, in eine Entleerstellung überführt werden, in der Maiskolben aus der Sammelbaugruppe entfernt werden. Ebenso lässt sich die Sammelbaugruppe durch Drehung der ersten Einheit relativ zur zweiten Einheit von der Entleerstellung in die Aufnahmestellung überführen. Die genannte Orientierung der Drehachse quer zur Ernterichtung ermöglicht dabei, dass die Sammelbaugruppe entleert werden kann, ohne ein seitliches Kippmoment zu erzeugen, das über die Sammelbaugruppe auch auf das Trägerfahrzeug wirken kann. Als seitliches Kippmoment ist dabei ein Drehmoment um eine Achse zu verstehen, die parallel zur Betriebsrichtung des Systems zur Ernte von Mais verläuft. Dies kann zu einer verminderten Standfestigkeit des Trägerfahrzeugs und infolgedessen zu einem Umkippen des Trägerfahrzeuges führen. Eine Vermeidung eines derartigen Kippmoments trägt zu einer Kippsicherheit des Trägerfahrzeuges bei. Dies ist insbesondere relevant, da das Trägerfahrzeug eine vergleichsweise kleine Spurweite aufweisen muss, um die schmalen Streifen Vatermais zwischen dem Muttermais abernten zu können, ohne den Muttermais unerwünscht zu beeinträchtigen. Mit anderen Worten bewirkt die genannte Orientierung der Drehachse, dass beim Überführen der Sammelbaugruppe von der Aufnahmestellung in die Entleerstellung eine Gewichtsverlagerung im Wesentlichen entlang der Betriebsrichtung stattfindet. Das Risiko einer verminderten Standfestigkeit des Trägerfahrzeugs und/oder eines Umkippens des Trägerfahrzeugs ist somit besonders gering.

In einem Beispiel ist die Drehachse mit Bezug auf die Ernterichtung an einer Rückseite der Sammelbaugruppe angeordnet. Die Rückseite der Sammelbaugruppe ist gleichbedeutend mit derjenigen Seite, die einem Trägerfahrzeug abgewandt ist. Für eine Drehung der ersten Einheit relativ zur zweiten Einheit kann somit ein Raum an der Rückseite der Sammelbaugruppe genutzt werden, d.h. ein Raum, der auf einer dem Trägerfahrzeug entgegengesetzten Seite der Sammelbaugruppe liegt. Das Trägerfahrzeug und die relativ zueinander drehenden Einheiten der Sammelbaugruppe konkurrieren also nicht um denselben Raum. Auf diese Weise kann insbesondere eine Kollision einer der Einheiten der Sammelbaugruppe mit dem Trägerfahrzeug ausgeschlossen werden. Ferner ist es bei einer derartigen Konfiguration in vorteilhafter Weise möglich, Maiskolben aus der Sammelbaugruppe in ein Transport- oder Lagerbehältnis umzufüllen. Dafür kann das Transport- oder Lagerbehältnis auf einer Rückseite der Sammelbaugruppe angeordnet werden und konkurriert somit auch nicht mit dem Trägerfahrzeug um Raum.

In einem Beispiel umfasst die erste Einheit der Sammelbaugruppe drei Wandelemente. Jedes der Wandelemente ist an einer Seite des Bodens vorgesehen. Dabei hat der Boden vorzugsweise eine rechteckige Form. Der Boden umfasst also vier Seiten, die jeweils einer Kante der rechteckigen Form entsprechen. Somit lassen sich Maiskolben mit hoher Präzision aus der Sammelbaugruppe entleeren, da auf dem Boden gelagerte Maiskolben auf drei Seiten durch die Wandelemente am Verlassen der ersten Einheit gehindert sind. Folglich bildet diejenige Seite des Bodens, an der kein Wandelement vorgesehen ist, eine bevorzugte Richtung, entlang derer Maiskolben die erste Einheit und somit die Sammelbaugruppe als Ganzes verlassen können. Beispielsweise ist in diesem Zusammenhang an derjenigen Seite, die in Richtung des Trägerfahrzeugs weist, kein Wandelement der ersten Einheit vorgesehen. Darüber hinaus dienen die drei Wandelemente der mechanischen Stabilisierung der ersten Einheit, die folglich vergleichsweise hohe Lasten aufnehmen kann. Alternativ oder zusätzlich umfasst die zweite Einheit vier Wandelemente. Die vier Wandelemente umschließen umfangsmäßig einen quaderförmigen Raum. Somit können in diesem quaderförmigen Raum Maiskolben sicher aufgenommen werden. Die vier Wandelemente können zueinander paarweise rechtwinklig angeordnet sein. Dies ist bei einer rechteckigen Grundfläche des Sammelraums der Fall. Die Wandelemente können als massive Wandelemente, beispielsweise aus Blech, ausgebildet sein. Die Wandelemente können auch zumindest teilweise als Gitter ausgebildet sein. Dies führt zu einer Gewichtseinsparung im Vergleich zu massiven Wandelementen. Weiterhin kann ein Füllstand des Sammelbehälters leicht durch Gitterelemente abgelesen werden, da diese teilweise durchblickt werden können.

In einem Beispiel grenzt in einer Aufnahmestellung der Sammelbaugruppe jeweils eines der Wandelemente der zweiten Einheit direkt an eines der Wandelemente der ersten Einheit an. Die Aufnahmestellung beschreibt dabei eine Stellung, in der Maiskolben aufgenommen und in der Sammelbaugruppe gesammelt werden können. Zusammen mit dem Boden und den Wandelementen der ersten Einheit können die vier Wandelemente der zweiten Einheit einen prismatischen Sammelraum mit viereckiger Grundfläche zum Sammeln von Maiskolben bilden. Dieser Sammelraum ist in einer Aufnahmestellung der Sammelbaugruppe auf einer Unterseite durch den Boden begrenzt. Optional ist der Sammelraum nach oben offen. Folglich können die Maiskolben zuverlässig in der Sammelbaugruppe gesammelt werden.

Im Gegensatz zur Aufnahmestellung beschreibt die Entleerstellung eine Stellung, in der Maiskolben aus der Sammeleinheit entfernt werden können. In der Entleerstellung grenzt lediglich ein Wandelement der zweiten Einheit an ein Wandelement der ersten Einheit an. Der Bereich, in dem das Wandelement der zweiten Einheit an das Wandelement der ersten Einheit in der Entleerstellung angrenzt, wird durch die Drehachse zwischen erster und zweiter Einheit gebildet.

In einem Beispiel umfasst die Sammelbaugruppe eine Montageschnittstelle zur Befestigung an dem Trägerfahrzeug oder Begleitfahrzeug. Die Montageschnittstelle kann zur Befestigung an einem Heck des Trägerfahrzeugs und/oder zur Befestigung der Sammelbaugruppe an einer Front des Trägerfahrzeuges ausgebildet sein. Dasselbe gilt für das Begleitfahrzeug. Für den Fall, dass die Sammelbaugruppe am Trägerfahrzeug montiert ist, wird die Vorsatzbaugruppe an der jeweils entgegengesetzten Seite des Trägerfahrzeuges, also an der Front oder am Heck, montiert. Die Montageschnittstelle ist insbesondere an der zweiten Einheit der Sammelbaugruppe vorgesehen. Die Sammelbaugruppe ist somit direkt ohne weitere Zwischenelemente am Heck oder an der Front des Trägerfahrzeugs montierbar. Die Sammelbaugruppe lässt sich somit vergleichsweise schnell und einfach am Trägerfahrzeug montieren. Die Sammelbaugruppe ist insbesondere auch mittelbar am Heck oder an der Front des Trägerfahrzeuges montierbar. Für den Fall der mittelbaren Montage kommt insbesondere ein Hubmast als Zwischenelement zwischen Sammelbaugruppe und Heck des Trägerfahrzeuges oder Sammelfahrzeuges in Betracht. Dieser dient dazu, die Sammelbaugruppe im Wesentlichen entlang einer Vertikalrichtung wahlweise anheben zu können. Dies ist insbesondere in Kombination mit der Entleerstellung der Sammelbaugruppe vorteilhaft, da auf diese Weise die Sammelbaugruppe oberhalb eines Transport- oder Lagerbehältnisses positioniert werden kann, in das die Maiskolben transferiert werden sollen. Das Transport- oder Lagerbehältnis kann insbesondere als Anhänger zur Abfuhr der Maiskolben von der Vermehrungsfläche, d.h. vom Feld, ausgebildet sein. Derartige Anhänger weisen beispielsweise eine Ladekante in einer Höhe von circa 3 Meter über dem Erdboden auf. Insbesondere in Verbindung mit einem Hubmast ist die aus der oben beschriebenen Orientierung der Drehachse resultierende Stabilität und Abwesenheit von Kippmomenten vorteilhaft. Die Montage über einen Hubmast ist ferner vorteilhaft, um bei einem Wendemanöver des mit der Sammelbaugruppe ausgestatteten Trägerfahrzeugs oder Begleitfahrzeugs die Sammelbaugruppe in einen Bereich oberhalb von eventuellen Hindernissen, z. B. Maispflanzen, zu bewegen. Auf diese Weise wird eine Wendigkeit des mit der Sammelbaugruppe ausgestatteten Trägerfahrzeugs oder Begleitfahrzeugs deutlich erhöht. Insbesondere wird es so möglich, mit dem Trägerfahrzeug oder Sammelfahrzeug, an dem die Sammelbaugruppe montiert ist, auf engem Raum, z. B. auf einem Feldweg, zu wenden. Die mittels des Hubmast nach oben bewegte Sammelbaugruppe wird dabei oberhalb von Maispflanzen oder andere Hindernissen bewegt.

Ein vierter Aspekt der Erfindung betrifft ein Verfahren zum Betreiben einer Sammelbaugruppe zum Aufnehmen abgetrennter Maiskolben. Die Sammelbaugruppe umfasst eine erste Einheit und eine zweite Einheit. Die erste Einheit umfasst einen Boden der Sammelbaugruppe und ist gegenüber der zweiten Einheit um eine Drehachse drehbar. Die Drehachse verläuft quer zu einer Ernterichtung. Das Verfahren umfasst das Überführen der Sammelbaugruppe von einer Aufnahmestellung in eine Entleerstellung oder umgekehrt durch Drehen der zweiten Einheit um die Drehachse relativ zur ersten Einheit. Die Ernterichtung ist als eine Betriebsrichtung der Sammelbaugruppe zu verstehen. Die Ernterichtung entspricht also derjenigen Richtung, entlang derer die Sammelbaugruppe zur Maisernte auf der Vermehrungsfläche, d.h. dem Feld, bewegt wird. Die Sammelbaugruppe kann durch Drehung der ersten Einheit relativ zur zweiten Einheit von einer Aufnahmestellung, in der die Sammelbaugruppe zum Aufnehmen von Maiskolben eingerichtet ist, in eine Entleerstellung überführt werden, in der Maiskolben aus der Sammelbaugruppe entfernt werden. Ebenso lässt sich die Sammelbaugruppe durch Drehung der ersten Einheit relativ zur zweiten Einheit von der Entleerstellung in die Aufnahmestellung überführen. Die genannte Orientierung der Drehachse quer zur Ernterichtung ermöglicht dabei, dass die Sammelbaugruppe entleert werden kann, ohne ein seitliches Kippmoment zu erzeugen, das über die Sammelbaugruppe auch auf das Trägerfahrzeug wirken kann. Als seitliches Kippmoment ist dabei ein Drehmoment um eine Achse zu verstehen, die parallel zur Betriebsrichtung des Systems zur Ernte von Mais verläuft. Dies kann zu einer verminderten Standfestigkeit des Trägerfahrzeugs und infolgedessen zu einem Umkippen des Trägerfahrzeuges führen. Eine Vermeidung eines derartigen Kippmoments trägt zu einer Kippsicherheit des Trägerfahrzeuges bei. Dies ist insbesondere relevant, da das Trägerfahrzeug eine vergleichsweise kleine Spurweite aufweisen muss, um die schmalen Streifen Vatermais zwischen dem Muttermais abernten zu können, ohne den Muttermais unerwünscht zu beeinträchtigen. Mit anderen Worten bewirkt die genannte Orientierung der Drehachse, dass beim Überführen der Sammelbaugruppe von der Aufnahmestellung in die Entleerstellung eine Gewichtsverlagerung im Wesentlichen entlang der Betriebsrichtung stattfindet. Das Risiko einer verminderten Standfestigkeit des Trägerfahrzeugs und/oder eines Umkippens des Trägerfahrzeugs ist somit besonders gering

Es ist zu beachten, dass die obigen Beispiele unabhängig von dem jeweiligen Aspekt der Erfindung miteinander kombiniert werden können.

Die Erfindung wird nachstehend anhand verschiedener Ausführungsbeispiele erläutert, die in den beigefügten Zeichnungen gezeigt sind. Es zeigen:
- Figur 1: eine schematische Draufsicht auf ein erfindungsgemäßes System zur Ernte von Mais, mit einer erfindungsgemäßen Vorsatzbaugruppe und einer erfindungsgemäßen Sammelbaugruppe, wobei die erfindungsgemäße Sammelbaugruppe mittels eines erfindungsgemäßen Verfahrens betreibbar ist, und wobei das erfindungsgemäße System an einem Trägerfahrzeug montiert ist,
- Figur 2: die Vorsatzbaugruppe aus Figur 1 in einer perspektivischen Ansicht von schräg oben,
- Figur 3: die Vorsatzbaugruppe aus Figur 2 in einer schematischen Seitenansicht, wobei sowohl eine Verwendungsstellung als auch eine Rückzugsstellung der Vorsatzbaugruppe gezeigt ist,
- Figur 4: eine alternative Vorsatzbaugruppe in einer schematischen Seitenansicht, wobei sowohl eine Verwendungsstellung als auch eine Rückzugsstellung der Vorsatzbaugruppe gezeigt ist,
- Figur 5: die Sammelbaugruppe aus Figur 1 in einer Seitenansicht entlang der Richtung V, wobei die Sammelbaugruppe eine Aufnahmestellung einnimmt,
- Figur 6: die Sammelbaugruppe aus Figur 1 in einer der Figur 5 entsprechenden Ansicht, wobei die Sammelbaugruppe eine Entleerstellung einnimmt,
- Figur 7: eine Detailansicht der Sammelbaugruppe aus Figur 5 entlang einer Richtung VII in Figur 5,
- Figur 8: eine Detailansicht der Sammelbaugruppe aus Figur 6 entlang einer Richtung VIII in Figur 6,
- Figur 9: eine Variante der erfindungsgemäßen Sammelbaugruppe in einem Zustand, in dem sie an einem Trägerfahrzeug montiert ist und eine Aufnahmestellung einnimmt,
- Figur 10: die Sammelbaugruppe aus Figur 9, wobei sie eine Entleerstellung einnimmt.
- Figur 11: in einer schematischen Seitenansicht ein weiteres erfindungsgemäßes System zur Ernte von Mais, das an einem Trägerfahrzeug in Form eines Traktors montiert ist, und
- Figur 12: in einer schematischen Seitenansicht noch ein erfindungsgemäßes System zur Ernte von Mais, das an einem Trägerfahrzeug in Form eines Pritschenfahrzeugs montiert ist

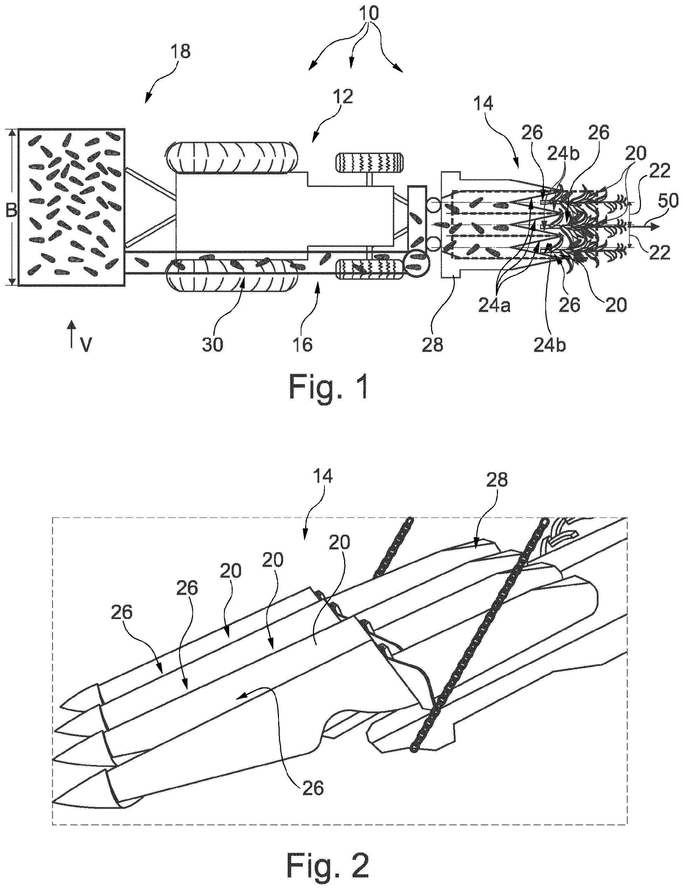

Figur 1 zeigt eine Draufsicht auf ein erfindungsgemäßes System 10 zur Ernte von Mais. Das System 10 ist an einem Trägerfahrzeug 12 montiert. Ferner zeigt die Figur 1 schematisch einige Maispflanzen und Maiskolben.

Das System 10 weist eine Vorsatzbaugruppe 14, eine Förderbaugruppe 16 sowie eine Sammelbaugruppe 18 auf.

Die Vorsatzbaugruppe 14 ist im vorliegenden Fall an einer Front des Trägerfahrzeugs 12 montiert. Die Vorsatzbaugruppe 14 dient zum Abtrennen von Maiskolben von übrigen Bestandteilen von Maispflanzen. Hierzu umfasst die Vorsatzbaugruppe 14 im dargestellten Ausführungsbeispiel insgesamt drei Trenneinheiten 20. Jeweils benachbarte Trenneinheiten 20 weisen einen Mittenabstand 22 von 37,5 cm auf. Dies ermöglicht das Ernten von Vatermais aus der Maissaatguterzeugung, der typischerweise in Pflanzreihen mit einem Reihenabstand von 37,5 cm angesät wird.

Aufgrund der Tatsache, dass die vorliegende Vorsatzbaugruppe 14 lediglich drei Trenneinheiten 20 aufweist, ist diese vergleichsweise schmal. Angrenzende Pflanzreihen mit Muttermaispflanzen werden somit beim Ernten des Vatermaises nicht beeinträchtigt.

Jede Trenneinheit 20 umfasst zwei nach Art eines sich verjüngenden Spalts aufeinander zulaufende Führungsflächen 24a, 24b, die zwischen sich einen sich in Richtung zum Trägerfahrzeug 12 verjüngenden Aufnahmeraum 26 für Maispflanzen begrenzen.

Ferner weist jede Trenneinheit 20 einen nicht näher dargestellten Einzugmechanismus auf, der beispielsweise zwei einander gegenüberliegende Einzugsketten mit Mitnehmern aufweist und dazu ausgebildet ist, Maispflanzen in den sich verjüngenden Aufnahmeraum 26 zu befördern (siehe auch Figur 2).

Im Betrieb der Vorsatzbaugruppe 14 werden also Maispflanzen in den sich verjüngenden Aufnahmeraum 26 eingezogen und in Richtung des schmalen Endes des Aufnahmeraums 26 bewegt. Da der Aufnahmeraum 26 an diesem Ende schmaler ist als ein Durchmesser von zu erntenden Maiskolben, werden die Maiskolben von den übrigen Bestandteilen der Maispflanzen abgetrennt und in einen Auffangbereich 28 befördert.

In einer nicht näher dargestellten Ausführungsform umfasst die Vorsatzbaugruppe 14 eine optionale Häckseleinrichtung, die dazu ausgebildet ist, die abgetrennten Maiskolben zu häckseln. Alternativ kann die Vorsatzbaugruppe 14 eine Querfördereinheit mit einer Förderschnecke umfassen, die dazu ausgebildet ist, Maiskolben auf die Förderbaugruppe 16 umzuleiten.

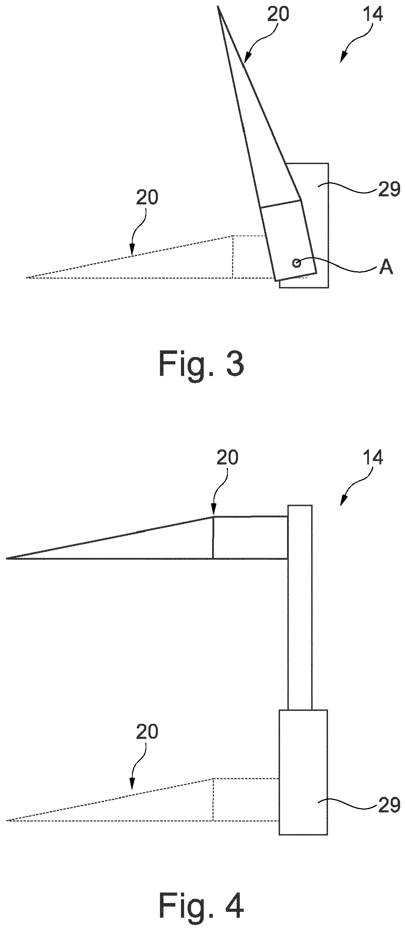

Die Vorsatzbaugruppe 14 umfasst ferner eine Schnittstelle 29, über die die Vorsatzbaugruppe 14 am Trägerfahrzeug 12 montiert ist. Dabei sind die Trenneinheiten 20 um eine Drehachse A drehbar an der Schnittstelle 29 gelagert (siehe insbesondere Figur 3).

Die Vorsatzbaugruppe 14 kann folglich eine Verwendungsstellung einnehmen, in der sie zur Ernte von Mais verwendet werden kann. Die Verwendungsstellung ist in Figur 3 mit gestrichelten Linien illustriert.

Darüber hinaus kann die Vorsatzbaugruppe 14 durch Drehen der Trenneinheiten 20 um die Drehachse A von der Verwendungsstellung in eine Rückzugsstellung überführt werden. Die Rückzugsstellung der Trenneinheiten 20 ist in Figur 3 mittels durchgezogenen Linien illustriert. Vereinfach gesagt sind in der Rückzugsstellung die Trenneinheiten 20 hochgeklappt. Sie schließen in der Ausführungsform aus Figur 3 mit einer Vertikalen einen Winkel von circa 20 Grad ein.

Figur 4 zeigt eine alternative Vorsatzbaugruppe 14. Diese unterscheidet sich dadurch von der zuvor erläuterten Vorsatzbaugruppe, dass die Trenneinheiten 20 verschiebbar an der Schnittstelle 29 gelagert sind. Dabei ist eine Verschieberichtung im Wesentlichen vertikal orientiert.

Ausgehend von einer Verwendungsstellung, die auch in Figur 4 mit gestrichelten Linien dargestellt ist, können die Trenneinheiten 20 also in die Rückzugsstellung, die mit durchgezogenen Linien illustriert ist, verschoben werden. Vereinfacht gesagt werden die Trenneinheiten 20 nach Art einer Gabelstaplergabel nach oben bewegt.

Das Überführen der Trenneinheiten 20 in die Rückzugsstellung hat den Vorteil, dass der Verbund aus Trägerfahrzeug 12 und System 10 zur Ernte von Mais kompakter, insbesondere kürzer wird. Dadurch lässt sich der Verbund aus Trägerfahrzeug 12 und System 10 zur Ernte von Mais auf engem Raum wenden. Für den Fall, dass die Vorsatzbaugruppe 14 gemäß Figur 4 ausgebildet ist, werden dabei die Trenneinheiten 20 angehoben, sodass sie über Hindernisse, insbesondere Maispflanzen, hinwegbewegt werden können.

Der Aufnahmeraum 28 der Vorsatzbaugruppe 14 ist mit der Förderbaugruppe 16 gekoppelt, sodass die Maiskolben oder daraus hergestelltes Häckselgut mittels der Förderbaugruppe 16 vom Aufnahmeraum in die Sammelbaugruppe 18 befördert werden können. Hierzu umfasst die Förderbaugruppe 16 ein Förderband 30.

In der Ausführungsform aus Figur 1 ist die Förderbaugruppe 16 bei einer Betrachtung entlang einer Vorwärts-Fahrrichtung des Trägerfahrzeugs 12 auf einer rechten Seite des Trägerfahrzeugs 12 montiert. Diese Position der Förderbaugruppe 16 am Trägerfahrzeug 12 stellt jedoch nur eine von mehreren Möglichkeiten dar. Alternativ hierzu kann die Förderbaugruppe 6 auch bei einer Betrachtung entlang der Vorwärts-Fahrrichtung des Trägerfahrzeugs 12 auf einer linken Seite des Trägerfahrzeugs 12 montiert sein. Auch ist es möglich, die Förderbaugruppe mittig, d.h. bei einer Betrachtung entlang der Vorwärts-Fahrrichtung des Trägerfahrzeugs 12 mittig, zu montieren. In einer Variante können auch mehrere Förderbaugruppen 16 am Trägerfahrzeug 12 montiert sein, z. B. eine links und eine rechts.

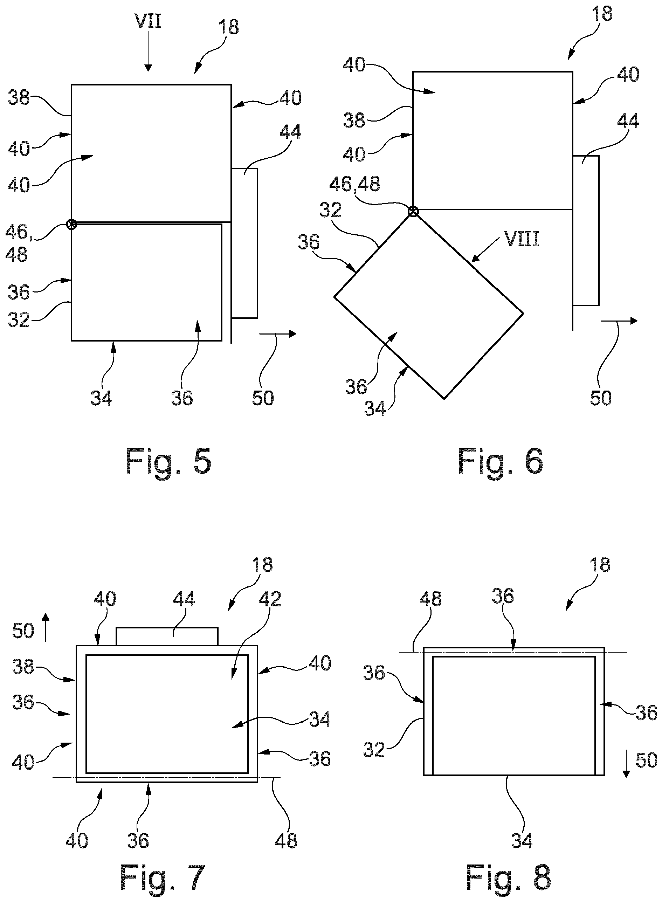

Die Sammelbaugruppe 18 wird im Folgenden anhand der Figuren 5 bis 8 näher erläutert.

Die Sammelbaugruppe 18 umfasst eine erste Einheit 32, die einen im Wesentlichen ebenen und rechteckigen Boden 34 sowie drei Wandelemente 36 umfasst.

Die drei Wandelemente 36 stehen jeweils im Wesentlichen senkrecht vom Boden 34 ab. Jedes der Wandelemente 36 ist an einer Seite des rechteckigen Bodens 34 befestigt und erstreckt sich im Wesentlichen über die gesamte zugeordnete Seite (siehe insbesondere Figur 8).

Zudem umfasst die Sammelbaugruppe eine zweite Einheit 38.

Die zweite Einheit 38 ist im Wesentlichen aus insgesamt vier Wandelementen 40 aufgebaut, wobei die Wandelemente paarweise rechtwinklig zueinander angeordnet sind, sodass diese einen quaderförmigen Raum 42 umfangsmäßig umschließen (siehe insbesondere Figur 7).

An der zweiten Einheit 38 ist ferner eine Montageschnittstelle 44 befestigt, mittels der die Sammelbaugruppe 18 am Trägerfahrzeug 12 montiert werden kann. Im Beispiel aus Figur 1 ist die Sammelbaugruppe 18 an einem Heck des Trägerfahrzeugs 12 montiert.

Die Montageschnittstelle 44 kann einen sogenannten Hubmasten umfassen oder mit einem am Trägerfahrzeug 12 montierten Hubmasten zusammenwirken. Insbesondere ist dabei der Hubmast über einen Oberlenker, z. B. einen hydraulischen Oberlenker, mit dem Trägerfahrzeug 12 verbunden. Mittels eines derartigen Oberlenkers kann der Hubmast und damit die Sammelbaugruppe 18 wahlweise vertikal oder in einem Winkel zu einer Vertikalen ausgerichtet werden. Das ist insbesondere vorteilhaft, um unerwünschte Kollisionen der Sammelbaugruppe 18 mit anderen Komponenten des Systems 10 zur Ernte von Mais, z. B. mit der Förderbaugruppe 16, zu vermeiden, wenn diese mittels des Hubmasts angehoben wird.

Mittels des Hubmasts kann die Sammelbaugruppe 18 beispielsweise bei einem Wendemanöver des Verbunds aus Trägerfahrzeug 12 und System 10 zur Ernte von Mais angehoben werden, sodass die Sammelbaugruppe 18 über Hindernisse, insbesondere Maispflanzen, hinwegbewegt werden kann. Ferner lässt sich die Sammelbaugruppe 18 mittels des Hubmasts zum Entladen über einem Anhänger positionieren.

Die erste Einheit 32 und die zweite Einheit 38 sind zudem über ein Scharnier 46 relativ zueinander drehbar verbunden. Eine zugehörige Drehachse 48 verläuft dabei quer zu einer Ernterichtung 50, als quer zu einer Richtung, entlang derer die Sammelbaugruppe 18 bewegt wird, wenn mittels des zugeordneten Systems 10 Mais geerntet wird.

Ferner ist die die Drehachse 48 mit Bezug auf die Ernterichtung 50 an einer Rückseite der Sammelbaugruppe 18 angeordnet.

Die erste Einheit 32 und die zweite Einheit 38 können also relativ zueinander um die Drehachse 48 gedreht werden.

Auf diese Weise kann die Sammelbaugruppe 18 eine Aufnahmestellung einnehmen, bei der die Sammelbaugruppe 18 dazu ausgebildet ist, Maiskolben aufzunehmen (siehe Figur 5).

In dieser Aufnahmestellung ergänzen sich die erste Einheit 32 und die zweite Einheit 38 zu einem Behältnis, das in einer Betriebsstellung lediglich oben offen ist. Das bedeutet, dass jeweils eines der Wandelemente 40 der zweiten Einheit 38 direkt an eines der Wandelemente 36 der ersten Einheit angrenzt. Dasjenige Wandelement 40, an dem in der dargestellten Ausführungsform die Montageschnittstelle 44 vorgesehen ist, grenzt dabei direkt an den Boden 34 an.

Die Sammelbaugruppe 18 kann alternativ eine Entleerstellung einnehmen, in der Maiskolben die Sammelbaugruppe verlassen können. In der Entleerstellung ist die erste Einheit 32 relativ zur zweiten Einheit 38 nach außen gedreht, sodass zwischen dem Boden 34 und demjenigen Wandelement 40, an dem die Montageschnittstelle 44 vorgesehen ist, ein Abstand größer null entsteht. Zudem ist in dieser Stellung der Boden 34 schräg nach unten geneigt.

In diesem Zusammenhang zeigt die Figur 6 nur eine von mehreren möglichen Entleerstellungen. Es ist auch möglich, die erste Einheit 32 relativ zur zweiten Einheit 38 so weit zu drehen bis der Boden 34 im Wesentlichen vertikal orientiert ist.

Die Sammelbaugruppe 18 umfasst ferner eine nicht näher dargestellte Verriegelungseinheit, mittels der sich die Sammelbaugruppe in der Aufnahmestellung verriegeln lässt. Dabei kann der Boden 34 über die Verriegelungseinheit selektiv an dasjenige Wandelement 40 mechanisch angekoppelt werden, an dem in der dargestellten Ausführungsform die Montageschnittstelle 44 vorgesehen ist. Eine solche mechanische Kopplung verhindert, dass die Sammelbaugruppe 18 die Entleerstellung einnimmt. Ferner stabilisiert die Verriegelungseinheit die Sammelbaugruppe 18 in der Aufnahmestellung, da mittels der Verriegelungseinheit der Boden 34 mechanisch an demjenigen Wandelement 40 abgestützt wird, an dem in der dargestellten Ausführungsform die Montageschnittstelle 44 vorgesehen ist.

Um die Sammelbaugruppe 18 von der Aufnahmestellung in die Entleerstellung überführen zu können, muss folglich mittels der Verriegelungseinheit die mechanische Kopplung zwischen dem Boden 34 und dem Wandelement 40 zumindest vorübergehend aufgehoben werden. Mit anderen Worten muss eine Entriegelung stattfinden. Dann kann die Sammelbaugruppe 18 unter Einwirkung der Schwerkraft auf den Boden 34 die Entleerstellung einnehmen. Alternativ kann der Boden 34 mittels eines elektrischen oder hydraulischen Antriebs, z. B. mittels eines Hydraulikzylinders, in eine der Entleerstellung entsprechende Stellung überführt, d.h. geöffnet, werden.

Um die Sammelbaugruppe 18 von der Entleerstellung in die Aufnahmestellung zu überführen muss in der dargestellten Ausführungsform der Boden 34 in eine der Aufnahmestellung entsprechende Position bewegt werden und mittels der nicht näher dargestellten Verriegelungseinheit am Wandelement 40 verriegelt werden. In diesem Zusammenhang kann der Boden manuell in die der Aufnahmestellung entsprechende Position bewegt werden, d.h. der Boden kann manuell geschlossen werden. Alternativ kann der Boden 34 mittels eines elektrischen oder hydraulischen Antriebs, z. B. mittels eines Hydraulikzylinders, in die der Aufnahmestellung entsprechende Stellung überführt, d.h. geschlossen, werden.

Für den Fall, dass zum Bewegen des Bodens 34 in eine der Aufnahmestellung entsprechende Stellung und/oder in eine der Entleerstellung entsprechende Stellung ein elektrischer oder hydraulischer Antrieb verwendet wird, kann dieser zumindest abschnittsweise innerhalb des Raum 42 angeordnet sein, d.h. im Inneren der Sammelbaugruppe 18. Bevorzugt ist ein solcher elektrischer oder hydraulischer Antrieb vollständig im Inneren der Sammelbaugruppe 18 angeordnet.

Gemäß einer Alternative, in der ein elektrischer oder hydraulischer Antrieb zumindest zum Überführen des Bodens 34 in eine der Aufnahmestellung entsprechende Stellung vorgesehen ist, kann der elektrische oder hydraulische Antrieb auch eine alternative Verriegelungseinheit bilden. Das bedeutet, dass in dieser Alternative der Boden 34 mittels des elektrischen oder hydraulischen Antriebs in der der Aufnahmestellung entsprechenden Stellung gehalten werden kann. Eine direkte mechanische Kopplung des Bodens 34 an dasjenige Wandelement 40, an dem die Montageschnittstelle 44 vorgesehen ist, ist somit nicht erforderlich. Allerdings kann eine derartige direkte mechanische Kopplung als Option vorgesehen sein. D.h. es können die Alternative, in der der elektrische oder hydraulische Antrieb eine alternative Verriegelungseinheit bilden, und die Alternative, in der eine Verriegelungseinheit zum selektiven direkten mechanischen Koppeln des Bodens 34 und desjenigen Wandelements 40 vorgesehen ist, an dem in der dargestellten Ausführungsform die Montageschnittstelle 44 vorgesehen ist, kombiniert werden. Im Falle einer solchen Kombination kann die Verriegelungseinheit, die eine direkte mechanische Kopplung bewirkt, auch als Sicherungseinheit bezeichnet werden.

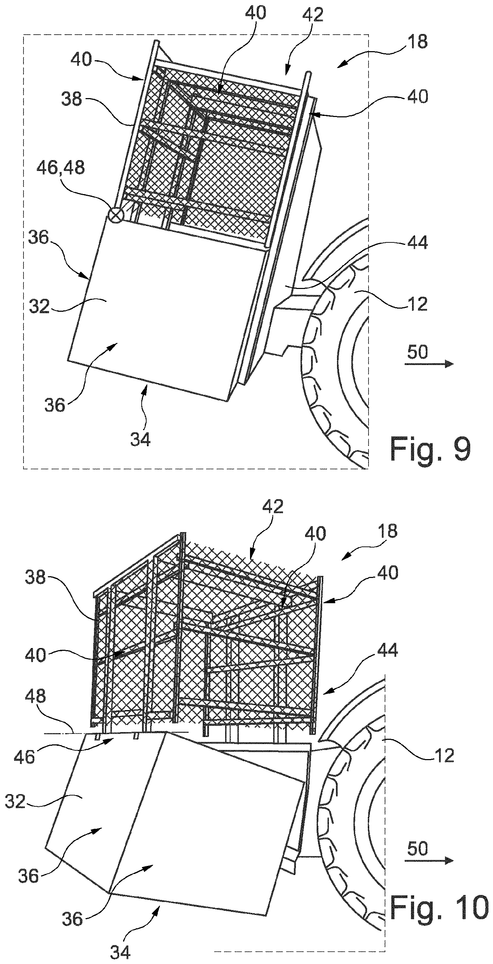

In den Figuren 9 und 10 ist eine weitere Ausführungsform der Sammelbaugruppe 18 gezeigt. Diese unterscheidet sich im Wesentlichen dadurch von der Ausführungsform aus den Figuren 5 bis 8, dass die Wände 40 der zweiten Einheit 38 abschnittsweise als Gitter ausgeführt sind.

Ferner umfasst im Beispiel der Figuren 9 und 10 die Schnittstelle 44 einen sogenannten Hubmasten.

Auch in der Figur 10 ist nur eine von mehreren möglichen Entleerstellungen gezeigt. Auch in diesem Beispiel ist es möglich, die erste Einheit 32 relativ zur zweiten Einheit 38 so weit zu drehen bis der Boden 34 im Wesentlichen vertikal orientiert ist.

Die Sammelbaugruppen 18 gemäß beider Ausführungsformen lassen sich dabei mittels eines Verfahrens zum Betreiben einer Sammelbaugruppe 18 betreiben. Dabei umfasst das Verfahren das Überführen der Sammelbaugruppe 18 von einer Aufnahmestellung in eine Entleerstellung oder umgekehrt durch Drehen der zweiten Einheit 38 um die Drehachse 48 relativ zur ersten Einheit 32.

Das System 10 zur Maisernte hat vorliegend eine Breit B von lediglich 190 cm. Mit anderen Worten weist der Verbund aus Vorsatzbaugruppe 14, Sammelbaugruppe 18 und Förderbaugruppe 16 eine Breite B von 190 cm auf. Das Trägerfahrzeug 12 hat eine geringere Breite. Somit ist die Kombination aus Trägerfahrzeug 12 und System 10 zur Ernte von Mais ebenfalls lediglich 190 cm breit.

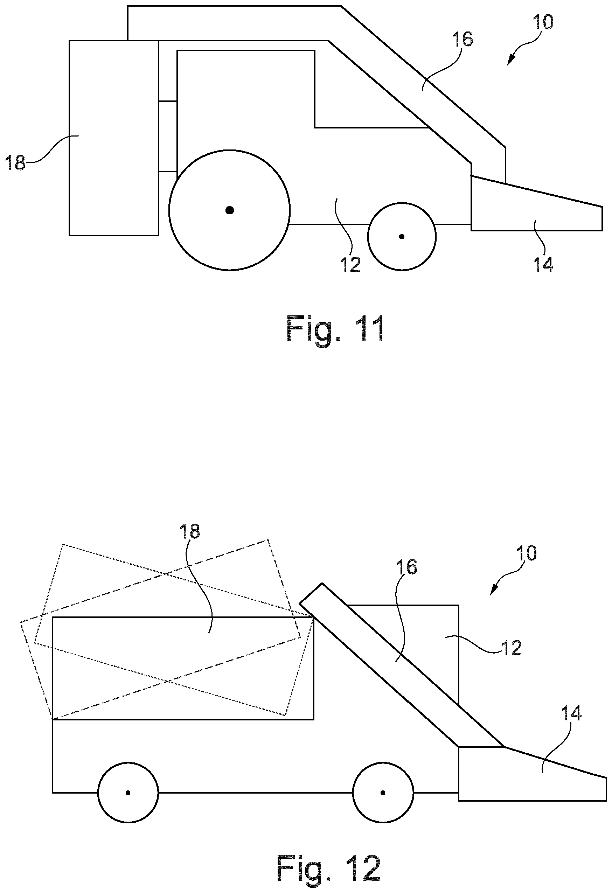

Figur 11 zeigt schematisch das System 10 zur Ernte von Mais in einem Zustand, in dem es an einem Trägerfahrzeug 12 montiert ist, das als Traktor ausgeführt ist.

Im Beispiel der Figur 12 ist das Trägerfahrzeug 12 als Pritschenfahrzeug ausgeführt. In diesem Beispiel dient die Pritsche als Sammelbaugruppe 18.

Gemäß einer Option kann dabei die Pritsche mit einem Kratzboden versehen sein, d.h. auf dem Boden der Ladefläche sind quer liegende Profile vorgesehen, die sich beispielsweise mit einem Kettentrieb in eine Entladerichtung antreiben lassen. Auf diese Weise können die quer liegenden Profile in Entladerichtung über den Boden der Ladefläche gefahren werden und so einen Entladevorgang unterstützen. Zusätzlich kann die Pritsche, d.h. auch der Kratzboden, angehoben oder gekippt werden. Dadurch wird ein Entladevorgang weiter unterstützt. Zwei Alternativen einer gekippten Pritsche sind mit gestrichelten Linien unterschiedlicher Art in der Figur 12 illustriert.

Gemäß einer weiteren Option kann die Pritsche kippbar ausgeführt sein. Auch das erleichtert das Entladen.

### BEZUGSZEICHENLISTE

- 10: System zur Ernte von Mais
- 12: Trägerfahrzeug
- 14: Vorsatzbaugruppe
- 16: Förderbaugruppe
- 18: Sammelbaugruppe
- 20: Trenneinheit
- 22: Mittenabstand
- 24a: Führungsfläche
- 24b: Führungsfläche
- 26: Aufnahmeraum
- 28: Auffangbereich
- 29: Schnittstelle
- 30: Förderband
- 32: erste Einheit der Sammelbaugruppe
- 34: Boden
- 36: Wandelement der ersten Einheit
- 38: zweite Einheit der Sammelbaugruppe
- 40: Wandelement der zweiten Einheit
- 42: quaderförmiger Raum
- 44: Montageschnittstelle
- 46: Scharnier
- 48: Drehachse der Sammelbaugruppe
- 50: Ernterichtung

- A: Drehachse der Vorsatzbaugruppe
- B: Breite des Systems zur Ernte von Mais

## Patentansprüche

1. System (10) zur Ernte von Mais, umfassend
eine Vorsatzbaugruppe (14) zur Montage an einem Trägerfahrzeug (12), wobei die Vorsatzbaugruppe (14) wenigstens zwei Trenneinheiten (20) zum Abtrennen von Maiskolben von übrigen Bestandteilen einer Maispflanze aufweist,
eine Sammelbaugruppe (18) zum Aufnehmen abgetrennter Maiskolben, und
eine Förderbaugruppe (16) zum Transferieren abgetrennter Maiskolben von der Vorsatzbaugruppe (14) zur Sammelbaugruppe (18),
wobei die wenigstens zwei Trenneinheiten (20) einen Mittenabstand (22) von 25 cm bis 50 cm aufweisen.

2. System (10) nach Anspruch 1, wobei die Vorsatzbaugruppe (14) zwei, drei oder vier Trenneinheiten (20) umfasst, wobei benachbarte Trenneinheiten (20) jeweils einen Mittenabstand (22) von 25 cm bis 50 cm aufweisen.

3. System (10) nach Anspruch 1 oder 2, wobei die Vorsatzbaugruppe (14) eine Schnittstelle (29) zur Montage der Vorsatzbaugruppe (14) am Trägerfahrzeug (12) aufweist, wobei die wenigstens zwei Trenneinheiten (20) drehbar oder verschiebbar an der Schnittstelle (29) gelagert sind.

4. System (10) nach einem der vorhergehenden Ansprüche, wobei das System (10) eine Breite (B) von höchstens 200 cm, vorzugsweise von höchstens 190 cm, aufweist.

5. System (10) nach einem der vorhergehenden Ansprüche, wobei die Sammelbaugruppe (18) eine erste Einheit (32) und eine zweite Einheit (38) umfasst, wobei die erste Einheit (32) einen Boden (34) der Sammelbaugruppe (18) umfasst und gegenüber der zweiten Einheit (38) um eine Drehachse (48) drehbar ist, wobei die Drehachse (48) quer zu einer Ernterichtung (50) verläuft.

6. System (10) nach Anspruch 5, wobei die Drehachse (48) mit Bezug auf die Ernterichtung (50) an einer Rückseite der Sammelbaugruppe (18) angeordnet ist.

7. System (10) nach Anspruch 5 oder 6, wobei die erste Einheit (30) drei Wandelemente (36) umfasst, wobei jedes der Wandelemente (36) an einer Seite des Bodens (34) vorgesehen ist.

8. System (10) nach einem der Ansprüche 5 bis 7, wobei die zweite Einheit (38) vier Wandelemente (40) umfasst, die einen quaderförmigen Raum (42) umfangsmäßig umschließen.

9. System (10) nach Anspruch 7 und Anspruch 8, wobei in einer Aufnahmestellung der Sammelbaugruppe (18) jeweils eines der Wandelemente (40) der zweiten Einheit (38) direkt an eines der Wandelemente (36) der ersten Einheit (32) angrenzt.

10. Vorsatzbaugruppe (14) für ein System (10) nach einem der vorhergehenden Ansprüche, wobei die Vorsatzbaugruppe (14) zur Montage an einem Trägerfahrzeug (12) vorgesehen ist und wenigstens zwei Trenneinheiten (20) zum Abtrennen von Maiskolben von übrigen Bestandteilen einer Maispflanze umfasst und wobei die wenigstens zwei Trenneinheiten (20) einen Mittenabstand (22) von 25 cm bis 50 cm aufweisen.

11. Vorsatzbaugruppe (14) nach Anspruch 10, wobei die Vorsatzbaugruppe (14) eine Schnittstelle (29) zur Montage der Vorsatzbaugruppe (14) am Trägerfahrzeug (12) aufweist, wobei die wenigstens zwei Trenneinheiten (20) drehbar oder verschiebbar an der Schnittstelle (29) gelagert sind.

12. Vorsatzbaugruppe (14) nach Anspruch 10 oder 11, wobei die Vorsatzbaugruppe (14) eine Breite von höchstens 200 cm, vorzugsweise von höchstens 190 cm, aufweist.

13. Sammelbaugruppe (18) für ein System (10) nach einem der Ansprüche 1 bis 9 und zum Aufnehmen abgetrennter Maiskolben, wobei die Sammelbaugruppe (18) eine erste Einheit (32) und eine zweite Einheit (38) umfasst, wobei die erste Einheit (32) einen Boden (34) der Sammelbaugruppe (18) umfasst und gegenüber der zweiten Einheit (38) um eine Drehachse (48) drehbar ist, wobei die Drehachse (48) quer zu einer Ernterichtung (50) verläuft, insbesondere wobei die Drehachse (48) mit Bezug auf die Ernterichtung (50) an einer Rückseite der Sammelbaugruppe (18) angeordnet ist.

14. Sammelbaugruppe (18) nach Anspruch 13, wobei die erste Einheit (32) drei Wandelemente (36) umfasst, wobei jedes der Wandelemente (36) an einer Seite des Bodens (34) vorgesehen ist und/oder wobei die zweite Einheit (38) vier Wandelemente (40) umfasst, die einen quaderförmigen Raum (42) umfangsmäßig umschließen.

15. Verfahren zum Betreiben einer Sammelbaugruppe (18) zum Aufnehmen abgetrennter Maiskolben, wobei die Sammelbaugruppe (18) eine erste Einheit (32) und eine zweite Einheit (38) umfasst, wobei die erste Einheit (32) einen Boden (34) der Sammelbaugruppe (18) umfasst und gegenüber der zweiten Einheit (38) um eine Drehachse (48) drehbar ist, wobei die Drehachse (48) quer zu einer Ernterichtung (50) verläuft, umfassend:
Überführen der Sammelbaugruppe (18) von einer Aufnahmestellung in eine Entleerstellung oder umgekehrt durch Drehen der ersten Einheit (32) um die Drehachse (48) relativ zur zweiten Einheit (38).
